# EUROPÄISCHE PATENTSCHRIFT

(11) **EP 3 218 182 B1**
(45) Veröffentlichungstag und Bekanntmachung des Hinweises auf die Patenterteilung: **17.10.2018**
(21) Anmeldenummer: 15794833.2
(22) Anmeldetag: 23.10.2015
(51) Int. Cl.: B32B 5/02, B32B 5/06, B32B 5/24, B60N 2/58, B32B 5/08, B32B 5/18, B32B 27/40, B32B 37/12, D04H 1/498, D04H 3/10

(54) **KASCHIERUNGSTEXTILVERBUNDMATERIAL ENTHALTEND EINE VLIESSTOFFKOMPONENTE UND EINE SCHAUMSTOFFKOMPONENTE**
LAMINATES COMPRISING NONWOVEN STRUCTURES AND FOAM
MATÉRIAU COMPOSITE TEXTILE DE CONTRECOLLAGE CONTENANT UN COMPOSANT NON TISSÉ ET UN COMPOSANT MOUSSE

(30) Priorität: 10.11.2014 DE 102014116354
(43) Veröffentlichungstag der Anmeldung: 20.09.2017
(73) Patentinhaber: J.H. Ziegler GmbH, 77855 Achern (DE)
(72) Erfinder: SCHÖNFELDER, Steffi, 77880 Sasbach (DE)
(74) Vertreter: Daub, Thomas
(86) Internationale Anmeldenummer: PCT/EP2015/074617
(87) Internationale Veröffentlichungsnummer: WO 2016/074906

(56) Entgegenhaltungen:
- EP-A1- 1 039 005
- WO-A2-2014/150336
- DE-A1- 19 956 319
- DE-B- 1 294 916
- DE-U1-202009 015 059
- US-A1- 2004 103 970

## Beschreibung

### Stand der Technik

Die Erfindung betrifft ein Sitzbezugskaschierungstextilverbundmaterial nach dem Oberbegriff des Anspruchs 1.

Es sind bereits Kaschierungstextilverbundmaterialien bekannt, die zumindest eine Vliesstoffkomponente und zumindest eine Schaumstoffkomponente umfassen, die miteinander verbunden sind. Hierbei sind die Vliesstoffkomponente und die Schaumstoffkomponente bei den bereits bekannten Kaschierungstextilverbundmaterialien mittels eines Klebeverfahrens miteinander verbunden.

Ferner ist bereits aus DE 20 2009 015 059 U1, aus WO 97/18 157 A2, aus DE 80 03 911 U1 sowie aus DE 1 294 916 A jeweils ein Kaschierungstextilverbundmaterial bekannt, das zumindest eine Vliesstoffkomponente und zumindest eine Schaumstoffkomponente umfasst, wobei die Schaumstoffkomponente mit der Vliesstoffkomponente verbunden ist, wobei die Vliesstoffkomponente und die Schaumstoffkomponente mechanisch miteinander verbunden sind.

Des Weiteren ist aus WO 2014/150336 A2 bereits ein Verbundmaterial bekannt, das eine Vliesstoffkomponente mit einer Dicke von 2,5 mm umfasst, wobei die Vliesstoffkomponente eine erste Faser aus Polyacrylnitril und eine zweite Faser aus Polyetherimid umfasst, wobei die erste und zweite Faser einen Feinheitswert von 1-4 denier aufweisen. Ferner umfasst das Verbundmaterial eine Schaumschicht mit einer Dicke von 2,5 mm und einer Dichte von wenigstens 0,01 g/cm³. Die Vliesstoffkomponente und die Schaumschicht sind miteinander vernadelt, wobei eine Nadel bei einem Vernadelungsprozess 1,55 mal pro cm² in die Vliesstoffkomponente und die Schaumschicht eindringt.

Aus EP 1 039005 A1 ist bereits ein Kunstleder für Schuhe bekannt, das eine Vliesstoffkomponente enthaltend 30-95 % Gew. Hohlfasern und 5-70 % Gew. Nicht-Hohlfasern sowie eine poröse Deckschicht umfasst.

Aus US 2004/103970 A1 ist bereits ein Vliesstoff bekannt, der Hohlfasern mit einem Feinheitswert von 2-18 denier aus Polyethylenterephthalat (PET) und Bikomponentenbindefasern mit einem Feinheitswert von 2-6 denier aufweist.

Die Aufgabe der Erfindung besteht insbesondere darin, ein gattungsgemäßes Sitzbezugskaschierungstextilverbundmaterial, insbesondere ein fälschungssicheres Sitzbezugskaschierungstextilverbundmaterial, bereitzustellen, das eine feste Verbindung zwischen der Vliesstoffkomponente und der Schaumstoffkomponente aufweist, wobei eine vorteilhafte Drapierbarkeit, insbesondere eine zumindest im Wesentlichen faltenfreie Anordnungsmöglichkeit, des Sitzbezugskaschierungstextilverbundmaterials erhalten bleibt. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Sitzbezugskaschierungstextilverbundmaterial mit zumindest einer Vliesstoffkomponente und mit zumindest einer Schaumstoffkomponente, die mit der Vliesstoffkomponente verbunden ist, wobei die Vliesstoffkomponente und die Schaumstoffkomponente mechanisch miteinander verbunden sind, wobei die Vliesstoffkomponente und die Schaumstoffkomponente miteinander vernadelt sind, wobei die Vliesstoffkomponente zumindest eine Bindefaser und zumindest eine Funktionsfaser umfasst.

Es wird vorgeschlagen, dass eine einer Schaumstoff-Vlies-Trennkraft entgegenwirkende Haltekraft zwischen der Vliesstoffkomponente und der Schaumstoffkomponente größer ist als 1 N, insbesondere bedingt durch eine formschlüssige und/oder kraftschlüssige Verbindung zwischen den Fasern der Vliesstoffkomponente und der Schaumstoffkomponente, wobei die Schaumstoffkomponente eine maximale Schaumstoffstärke aufweist, die einem Wert aus einem Wertebereich von 1 mm bis 6 mm entspricht, wobei die Schaumstoffkomponente als Polyurethan-Polyether-Schaum oder als Polyurethan-Polyester-Schaum ausgebildet ist, wobei die Funktionsfaser einen Feinheitswert aufweist, der einem Wert zwischen 1,5 dtex und 24 dtex entspricht und wobei die Bindefaser einen Feinheitswert aufweist, der einem Wert zwischen 1 dtex und 9 dtex entspricht. Unter "mechanisch miteinander verbunden" soll hier insbesondere eine formschlüssige und/oder kraftschlüssige Verbindung zwischen zumindest zwei Elementen verstanden werden, insbesondere eine formschlüssige und/oder kraftschlüssige Verbindung zwischen der Vliesstoffkomponente und der Schaumstoffkomponente. Vorzugsweise sind die Vliesstoffkomponente und die Schaumstoffkomponente stoffschlussfrei miteinander mechanisch verbunden. Besonders bevorzugt greifen hierbei Fasern der Vliesstoffkomponente in die Schaumstoffkomponente ein. Vorzugsweise ist das Sitzbezugskaschierungstextilverbundmaterial dazu vorgesehen, zumindest teilweise einen Sitzbezug, insbesondere einen Kraftfahrzeugsitzbezug, zu bilden. Unter "vorgesehen" soll insbesondere speziell ausgelegt und/oder speziell ausgestattet verstanden werden. Darunter, dass ein Element
und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt oder dass das Element und/oder die Einheit speziell zu einer Erfüllung dieser bestimmten Funktion ausgelegt ist.

Die Vliesstoffkomponente umfasst zumindest eine Bindefaser (Schmelzfaser) und zumindest eine Funktionsfaser. Die Bindefaser weist hierbei einen Feinheitswert auf, der größer ist als 1 dtex, bevorzugt größer ist als 5 dtex und kleiner ist als 15 dtex. Erfindungsgemäß weist die Bindefaser einen Feinheitswert auf, der einem Wert zwischen 1 dtex und 9 dtex entspricht. Vorzugsweise weist die Bindefaser eine Schmelztemperatur auf, die einem Wert aus einem Wertebereich von 100 °C bis 190 °C entspricht. Besonders bevorzugt weist die Bindefaser eine Schmelztemperatur auf, die einem Wert aus einem Wertebereich von 130 °C bis 160 °C entspricht.

Bevorzugt ist die Funktionsfaser als Polyesterfaser, insbesondere als Polyethylenterephthalatfaser, ausgebildet. Es ist jedoch auch denkbar, dass die Funktionsfaser eine andere, einem Fachmann als sinnvoll erscheinende Ausgestaltung aufweist, wie beispielsweise eine Ausgestaltung als Polyamidfaser, als Polyolefinfaser, als Polyacrylnitrilfaser, als Polyvinylchloridfaser, als Polyvinylalkoholfaser, als Polyvinylidenfaser, als Polytetrafluorethylenfaser, als Polyurethanfaser o. dgl. Die Funktionsfaser weist hierbei insbesondere einen Feinheitswert auf, der größer ist als 1 dtex, bevorzugt größer ist als 15 dtex und kleiner ist als 30 dtex. Erfindungsgemäß weist die Funktionsfaser einen Feinheitswert auf, der einem Wert zwischen 1,5 dtex und 24 dtex entspricht. Vorzugsweise weist die Funktionsfaser ein hohes Wiedererholvermögen auf. Hierzu ist die Funktionsfaser bevorzugt spiralgekräuselt ausgebildet. Besonders bevorzugt weist die Vliesstoffkomponente eine Vielzahl an Bindefasern und eine Vielzahl an Funktionsfasern auf, die miteinander vermischt sind. Hierbei können die Bindefasern und/oder die Funktionsfasern als Spinnfasern (Stapelfasern) oder als Filamente (Endlosfasern) vorliegen. Die Bindefasern und/oder die Funktionsfasern der Vliesstoffkomponente sind infolge eines Vermischens vorzugsweise untereinander mittels einer formschlüssigen Verbindung (durch Verschlingung), mittels Kohäsion und/oder mittels Adhäsion verbunden. Hierbei können die Bindefasern und/oder die Funktionsfasern zu einer Bildung der Vliesstoffkomponente orientiert oder wirr angeordnet sein. Die Vliesstoffkomponente weist insbesondere ein Flächengewicht auf, das größer ist als 30 g/m², bevorzugt größer ist als 60g/m² und besonders bevorzugt kleiner ist als 550 g/m². Ganz besonders bevorzugt weist die Vliesstoffkomponente ein Flächengewicht auf, das einem Wert aus einem Wertebereich von 50 g/m² bis 500 g/m² entspricht.

Die Schaumstoffkomponente ist als Polyurethan-Polyether-Schaum oder als Polyurethan-Polyester-Schaum, insbesondere als Polyurethan-Polyether-Schnittschaum oder als Polyurethan-Polyester-Schnittschaum, ausgebildet. Es ist jedoch auch denkbar, dass die Schaumstoffkomponente eine andere, einem Fachmann als sinnvoll erscheinende Ausgestaltung aufweist, insbesondere eine andere, einem Fachmann als sinnvoll erscheinende Ausgestaltung als Schaum mit textilem Charakter, der weichelastisch ist, der rollbar ist und hohe Rücksprungkräfte sowie eine bevorzugt hohe Luftdurchlässigkeit (z.B. retikulierte Schäume) aufweisen kann. Die Schaumstoffkomponente weist eine maximale Schaumstoffstärke auf, die kleiner ist als 10 mm, kleiner ist als 8 mm und größer ist als 0,9 mm. Erfindungsgemäß weist die Schaumstoffkomponente eine maximale Schaumstoffstärke auf, die einem Wert aus einem Wertebereich von 1 mm bis 6 mm entspricht.

Unter einer "Schaumstoff-Vlies-Trennkraft" soll hier insbesondere eine in zumindest einem Belastungsfall auf das Sitzbezugskaschierungstextilverbundmaterial einwirkende Kraft verstanden werden, die eine Trennung einer Verbindung zwischen der Vliesstoffkomponente und der Schaumstoffkomponente hervorrufen kann, insbesondere betrachtet entlang einer zumindest im Wesentlichen senkrecht zur Verbindungsfläche der Schaumstoffkomponente verlaufenden Richtung. Insbesondere ist eine einer Schaumstoff-Vlies-Trennkraft entgegenwirkende Haltekraft zwischen der Vliesstoffkomponente und der Schaumstoffkomponente kleiner als 1 kN, bevorzugt kleiner als 0,8 kN und besonders bevorzugt größer als 10 N. Eine einer Schaumstoff-Vlies-Trennkraft entgegenwirkende Haltekraft zwischen der Vliesstoffkomponente und der Schaumstoffkomponente ist hierbei vorzugsweise durch ein Eingreifen der Fasern der Vliesstoffkomponente in die Schaumstoffkomponente bedingt, insbesondere bedingt durch eine formschlüssige und/oder kraftschlüssige Verbindung zwischen den Fasern der Vliesstoffkomponente und der Schaumstoffkomponente. Mittels der erfindungsgemäßen Ausgestaltung kann vorteilhaft eine/r ungewollte/n Trennung der Vliesstoffkomponente und der Schaumstoffkomponente entgegengewirkt werden oder zumindest im Wesentlichen verhindert werden. Es kann vorteilhaft ein Sitzbezugskaschierungstextilverbundmaterial zur Verfügung gestellt werden, das eine feste Verbindung zwischen der Vliesstoffkomponente und der Schaumstoffkomponente aufweist, wobei eine vorteilhafte Drapierbarkeit, insbesondere eine zumindest im Wesentlichen faltenfreie Anordnungsmöglichkeit, des Sitzbezugskaschierungstextilverbundmaterial erhalten bleibt. Es kann zudem vorteilhaft auf ein zusätzliches Klebemedium zu einer Verbindung der Vliesstoffkomponente und der Schaumstoffkomponente verzichtet werden. Somit kann vorteilhaft ein gut zu verarbeitendes Sitzbezugskaschierungstextilverbundmaterial zur Verfügung gestellt werden. Das Sitzbezugskaschierungstextilverbundmaterial kann sich vorteilhaft jeder Bewegung/Rundung/Biegung (konvex oder konkav) einer Oberfläche eines Gegenstands, insbesondere eines Sitzes, an dem das Kaschierungstextilverbundmaterial anordenbar ist, anpassen.

Des Weiteren wird vorgeschlagen, dass die Vliesstoffkomponente und die Schaumstoffkomponente miteinander vernadelt sind, wobei zumindest mehr als 5 % einer gesamten Verbindungsfläche der Schaumstoffkomponente von Fasern der Vliesstoffkomponente durchstoßen sind. Der Begriff "vernadelt" soll hier insbesondere eine mechanische Verbindung zwischen der Vliesstoffkomponente und der Schaumstoffkomponente definieren, wobei zumindest eine Faser, insbesondere eine Vielzahl an Fasern, der Vliesstoffkomponente sich zumindest teilweise in einem mit der Schaumstoffkomponente verbundenen Zustand der Vliesstoffkomponente in die Schaumstoffkomponente hinein erstreckt/erstrecken. Unter einer "Verbindungsfläche der Schaumstoffkomponente" soll hier insbesondere eine gesamte Fläche der Schaumstoffkomponente verstanden werden, die in einem mit der Vliesstoffkomponente verbundenen Zustand an der Vliesstoffkomponente anliegt, insbesondere eine in eine Projektionsebene projizierte Fläche der Schaumstoffkomponente. Bevorzugt sind die Vliesstoffkomponente und die Schaumstoffkomponente mittels eines Vernadelungsprozesses miteinander verbunden. Somit sind Fasern der Vliesstoffkomponente vorzugsweise in die Schaumstoffkomponente eingenadelt. Bevorzugt erstrecken sich Fasern der Vliesstoffkomponente zumindest auf 5 % der gesamten Verbindungsfläche der Schaumstoffkomponente, insbesondere verteilt auf die gesamte Verbindungsfläche, entlang einer zumindest im Wesentlichen quer zur Verbindungsfläche der Schaumstoffkomponente verlaufenden Richtung in die Schaumstoffkomponente hinein. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Mittels der erfindungsgemäßen Ausgestaltung kann eine besonders vorteilhafte und sichere Verbindung zwischen der Vliesstoffkomponente und der Schaumstoffkomponente ermöglicht werden. Es kann vorteilhaft eine hohe Stabilität der Schaumstoffkomponente erhalten bleiben. Somit können vorteilhaft eine Elastizität und eine Haltbarkeit der Schaumstoffkomponente erhalten bleiben. Zudem kann vorteilhaft eine Oberflächenspannung der Schaumstoffkomponente durch ein Ein- und/oder Durchdringen einer Nadel während des Vernadelungsprozesses gebrochen (konvex oder konkav) einer Oberfläche eines Gegenstands, insbesondere eines Sitzes, an dem das Sitzbezugskaschierungstextilverbundmaterial anordenbar ist, anpassen.

Des Weiteren wird vorgeschlagen, dass die Vliesstoffkomponente und die Schaumstoffkomponente miteinander vernadelt sind, wobei zumindest mehr als 5 % einer gesamten Verbindungsfläche der Schaumstoffkomponente von Fasern der Vliesstoffkomponente durchstoßen sind. Der Begriff "vernadelt" soll hier insbesondere eine mechanische Verbindung zwischen der Vliesstoffkomponente und der Schaumstoffkomponente definieren, wobei zumindest eine Faser, insbesondere eine Vielzahl an Fasern, der Vliesstoffkomponente sich zumindest teilweise in einem mit der Schaumstoffkomponente verbundenen Zustand der Vliesstoffkomponente in die Schaumstoffkomponente hinein erstreckt/erstrecken. Unter einer "Verbindungsfläche der Schaumstoffkomponente" soll hier insbesondere eine gesamte Fläche der Schaumstoffkomponente verstanden werden, die in einem mit der Vliesstoffkomponente verbundenen Zustand an der Vliesstoffkomponente anliegt, insbesondere eine in eine Projektionsebene projizierte Fläche der Schaumstoffkomponente. Bevorzugt sind die Vliesstoffkomponente und die Schaumstoffkomponente mittels eines Vernadelungsprozesses miteinander verbunden. Somit sind Fasern der Vliesstoffkomponente vorzugsweise in die Schaumstoffkomponente eingenadelt. Bevorzugt erstrecken sich Fasern der Vliesstoffkomponente zumindest auf 5 % der gesamten Verbindungsfläche der Schaumstoffkomponente, insbesondere verteilt auf die gesamte Verbindungsfläche, entlang einer zumindest im Wesentlichen quer zur Verbindungsfläche der Schaumstoffkomponente verlaufenden Richtung in die Schaumstoffkomponente hinein. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Mittels der erfindungsgemäßen Ausgestaltung kann eine besonders vorteilhafte und sichere Verbindung zwischen der Vliesstoffkomponente und der Schaumstoffkomponente ermöglicht werden. Es kann vorteilhaft eine hohe Stabilität der Schaumstoffkomponente erhalten bleiben. Somit können vorteilhaft eine Elastizität und eine Haltbarkeit der Schaumstoffkomponente erhalten bleiben. Zudem kann vorteilhaft eine Oberflächenspannung der Schaumstoffkomponente durch ein Ein- und/oder Durchdringen einer Nadel während des Vernadelungsprozesses gebrochen werden, um eine vorteilhafte Anpassbarkeit des Sitzbezugskaschierungstextilverbundmaterial, insbesondere der Schaumstoffkomponente, an eine Form eines Gegenstands, an dem das Sitzbezugskaschierungstextilverbundmaterial anordenbar ist, zu ermöglichen.

Besonders vorteilhafterweise wird vorgeschlagen, dass die Vliesstoffkomponente und die Schaumstoffkomponente miteinander vernadelt sind, wobei zumindest mehr als 15 % der gesamten Verbindungsfläche der Schaumstoffkomponente von Fasern der Vliesstoffkomponente durchstoßen sind. Bevorzugt erstrecken sich Fasern der Vliesstoffkomponente zumindest auf 15 % der Verbindungsfläche der Schaumstoffkomponente, insbesondere verteilt auf die gesamte Verbindungsfläche, entlang einer zumindest im Wesentlichen quer zur Verbindungsfläche der Schaumstoffkomponente verlaufenden Richtung in die Schaumstoffkomponente hinein. Vorzugsweise sind die Fasern, die die Verbindungsfläche der Schaumstoffkomponente durchstoßen, zumindest im Wesentlichen homogen verteilt an der Verbindungsfläche der Schaumstoffkomponente angeordnet. Mittels der erfindungsgemäßen Ausgestaltung kann vorteilhaft eine besonders sichere Verbindung zwischen der Vliesstoffkomponente und der Schaumstoffkomponente realisiert werden, die vorteilhaft widerstandsfähig gegenüber einer Einwirkung von Trennkräften ist. Zudem kann vorteilhaft ein Zurücksetzen des Sitzbezugskaschierungstextilverbundmaterials an einem als Lederzuschnitt ausgebildeten weiteren Material erfolgen, so dass vorteilhaft an Kreuzungsstellen mehrerer Lederzuschnitte an einem Gegenstand, insbesondere an einem Sitz, an dem das Sitzbezugskaschierungstextilverbundmaterial zusammen mit dem Lederzuschnitt anordenbar ist, eine dünne Naht ermöglicht werden kann.

Ferner wird vorgeschlagen, dass die Vliesstoffkomponente und die Schaumstoffkomponente miteinander vernadelt sind, wobei pro 1 cm² der Verbindungsfläche der Schaumstoffkomponente zumindest zwei Fasern der Vliesstoffkomponente in die Schaumstoffkomponente eindringen. Insbesondere dringen pro 1 cm² der Verbindungsfläche der Schaumstoffkomponente zumindest drei Fasern der Vliesstoffkomponente, bevorzugt zumindest fünf Fasern der Vliesstoffkomponente und besonders bevorzugt zumindest zehn Fasern der Vliesstoffkomponente in die Schaumstoffkomponente ein. Ganz besonders bevorzugt dringen pro 1 cm² der Verbindungsfläche der Schaumstoffkomponente mehr als zehn Fasern, insbesondere zumindest 20 bis 300 Fasern, der Vliesstoffkomponente in die Schaumstoffkomponente ein. Unter dem Ausdruck "in die Schaumstoffkomponente eindringen" soll hier insbesondere eine Anordnung von Fasern der Vliesstoff-Wesentlichen senkrecht zur Verbindungsfläche der Schaumstoffkomponente, verlaufenden Richtung, verstanden werden, die insbesondere von zumindest 70 %, bevorzugt von zumindest 80 % und besonders bevorzugt von zumindest 90 % einer Gesamtanzahl von miteinander verbundenen Fasern der Vliesstoffkomponente gebildet wird, wobei insbesondere eine Gesamtheit der miteinander verbundenen Fasern, betrachtet in einem Querschnitt, eine polygonale Form, wie beispielsweise ein Rechteck, ein Quadrat o. dgl., bilden. Hierbei sollen insbesondere einzelne Fasern, die sich über die polygonale Form hinaus erstrecken, zu einer Bestimmung der maximalen Vliesstoffstärke der Vliesstoffkomponente unberücksichtigt bleiben. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung kann vorteilhaft eine komfortable Polsterung ermöglicht werden. Somit kann vorteilhaft außer einem Schaumkern für eine Sitzpolsterung auf zusätzliche, unternähte oder verklebte Polstermaterialien verzichtet werden.

Ganz besonders bevorzugt weist die Funktionsfaser einen Feinheitswert auf, der einem Wert aus einem Wertebereich von 1,5 dtex bis 24 dtex entspricht. Mittels der erfindungsgemäßen Ausgestaltung kann vorteilhaft eine offenporige Vliesstoffkomponente realisiert werden. Somit kann vorteilhaft eine atmungsaktive Vliesstoffkomponente realisiert werden.

Des Weiteren wird vorgeschlagen, dass die Funktionsfaser als Hohlfaser ausgebildet ist. Vorzugsweise weist die Vliesstoffkomponente zumindest einen Teil an Funktionsfasern auf, die als Hohlfasern ausgebildet sind, und einen Teil an Funktionsfasern, die nicht als Hohlfasern ausgebildet sind. Der Begriff "Hohlfaser" soll hier insbesondere eine Faser definieren, die zumindest einen Hohlraum aufweist, insbesondere eine Faser, die, betrachtet entlang einer Längsachse der Faser, zumindest einen sich zumindest im Wesentlichen entlang einer Gesamtlänge der Faser erstreckenden Hohlraum aufweist, der, betrachtet entlang zumindest einer um die Längsachse der Faser verlaufenden Umfangsrichtung, von zumindest einem Mantel der Faser umschlossen ist. Der Mantel der Faser kann hierbei den Hohlraum insbesondere kreisringförmig, trilobal, polygonal o. dgl. umgeben. Hierbei weist die als Hohlfaser ausgebildete Funktionsfaser vorzugsweise einen Hohlraumanteil von insbesondere zumindest mehr als 1 %, bevorzugt zumindest mehr als 5 % und besonders bevorzugt zumindest mehr als 8 % auf, bezogen auf einen Gesamtvolumenanteil der Hohlfaser. Ganz besonders bevorzugt weist die als Hohlfaser ausgebildete Funktionsfaser einen Hohlraumanteil von weniger als 15 %, insbesondere im Bereich von 10 %, bezogen auf einen Gesamtvolumenanteil der Hohlfaser auf. Mittels der erfindungsgemäßen Ausgestaltung kann besonders bevorzugt eine Vliesstoffkomponente mit einer spiralgekräuselten Faser realisiert werden.

Ferner wird vorgeschlagen, dass die Schaumstoffkomponente ein Raumgewicht aufweist, das größer ist als 10 kg/m³. Bevorzugt weist die Schaumstoffkomponente ein Raumgewicht auf, das größer ist als 15 kg/m³ und besonders bevorzugt kleiner ist als 100 kg/m³. Ganz besonders bevorzugt weist die Schaumstoffkomponente ein Raumgewicht auf, das einem Wert aus einem Wertbereiche von 20 kg/m³ bis 90 kg/m³ entspricht. Mittels der erfindungsgemäßen Ausgestaltung kann vorteilhaft ein Sitzbezugskaschierungstextilverbundmaterial zur Verfügung gestellt werden, das vorteilhafte Polsterungseigenschaften aufweist.

Zudem wird vorgeschlagen, dass das Sitzbezugskaschierungstextilverbundmaterial zumindest eine Fälschungssicherungseinheit aufweist. Somit kann vorteilhaft eine hohe Sicherheit gegen eine Fälschung des Sitzbezugskaschierungstextilverbundmaterials erreicht werden.

Des Weiteren wird vorgeschlagen, dass die Fälschungssicherungseinheit zumindest im Wesentlichen unlösbar mit der Vliesstoffkomponente und/oder mit der Schaumstoffkomponente verbunden ist. Unter "zumindest im Wesentlichen unlösbar" soll hier insbesondere eine Verbindung von zumindest zwei Elementen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind. Mittels der erfindungsgemäßen Ausgestaltung kann vorteilhaft sichergestellt werden, dass die Fälschungssicherungseinheit nicht ungewollt vom Sitzbezugskaschierungstextilverbundmaterial entfernt wird.

Ferner wird vorgeschlagen, dass die Fälschungssicherungseinheit als elektronische Fälschungssicherungseinheit ausgebildet ist. Hierbei ist es denkbar, dass die Fälschungssicherungseinheit zumindest ein Fälschungssicherungselement umfasst, das zumindest im Wesentlichen unlösbar mit der Vliesstoffkomponente und/oder mit der Schaumstoffkomponente verbunden ist, und mittels eines Auslesegeräts der Fälschungssicherungseinheit auslesbar ist. Das Fälschungssicherungselement könnte hierbei als RFID-Chip o. dgl. ausgebildet sein. Weitere, einem Fachmann als sinnvoll erscheinende Ausgestaltungen der elektronischen Fälschungssicherungseinheit sind ebenfalls denkbar, wie beispielsweise eine Ausgestaltung als Barcodefälschungssicherungseinheit o. dgl. Mittels der erfindungsgemäßen Ausgestaltung kann vorteilhaft eine schwer zu umgehende Fälschungssicherungseinheit realisiert werden.

Zudem wird vorgeschlagen, dass die Fälschungssicherungseinheit alternativ oder zusätzlich als mechanische Fälschungssicherungseinheit ausgebildet ist. Hierbei ist es denkbar, dass beispielsweise in die Vliesstoffkomponente ein als verschiedenfarbige Faser ausgebildetes Fälschungssicherungselement der Fälschungssicherungseinheit eingearbeitet ist oder dass beispielsweise in die Vliesstoffkomponente ein als unter UV-Licht leuchtende Faser ausgebildetes Fälschungssicherungselement der Fälschungssicherungseinheit eingearbeitet ist. Weitere, einem Fachmann als sinnvoll erscheinende Ausgestaltungen sind ebenfalls denkbar. Mittels der erfindungsgemäßen Ausgestaltung kann vorteilhaft eine konstruktiv einfache Fälschungssicherungseinheit realisiert werden.

Des Weiteren wird ein Sitzbezug vorgeschlagen, der zumindest teilweise aus dem Textilverbundmaterial gebildet ist.

Das erfindungsgemäße Sitzbezugskaschierungstextilverbundmaterial und/oder der erfindungsgemäße Sitzbezug sollen/soll hierbei nicht auf die oben beschriebene Anwendung und Ausführungsform beschränkt sein. Insbesondere können/kann das erfindungsgemäße Sitzbezugskaschierungstextilverbundmaterial und/oder der erfindungsgemäße Sitzbezug zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schnittansicht eines erfindungsgemäßen Sitzbezugskaschierungstextilverbundmaterials in einer schematischen Darstellung,
- Fig. 2: eine Schnittansicht eines erfindungsgemäßen Sitzbezugskaschierungstextilverbundmaterials mit einem am erfindungsgemäßen Sitzbezugskaschierungstextilverbundmaterial angeordneten Leder eines erfindungsgemäßen Sitzbezugs in einer schematischen Darstellung und
- Fig. 3: eine Schnittansicht eines erfindungsgemäßen Sitzbezugskaschierungstextilverbundmaterials mit einem am erfindungsgemäßen Sitzbezugskaschierungstextilverbundmaterial angeordneten Leder und einer am Leder angeordneten Lederverstärkung eines erfindungsgemäßen Sitzbezugs in einer schematischen Darstellung.

### Beschreibung des Ausführungsbeispiels

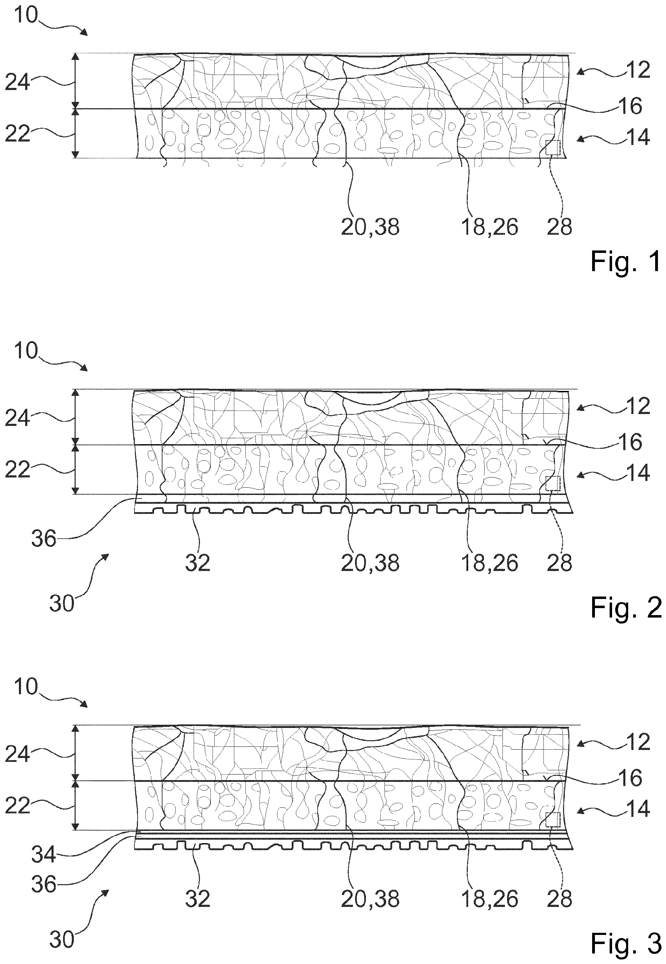

Fig. 1 zeigt ein Kaschierungstextilverbundmaterial 10 mit zumindest einer Vliesstoffkomponente 12 und mit zumindest einer Schaumstoffkomponente 14, die mit der Vliesstoffkomponente 12 verbunden ist. Hierbei sind die Vliesstoffkomponente 12 und die Schaumstoffkomponente 14 mechanisch miteinander verbunden. Die Vliesstoffkomponente 12 und die Schaumstoffkomponente 14 sind miteinander vernadelt, wobei zumindest mehr als 5 % einer gesamten Verbindungsfläche 16 der Schaumstoffkomponente 14 von Fasern 18, 20 der Vliesstoffkomponente 12 durchstoßen sind. Vorzugsweise sind die Vliesstoffkomponente 12 und die Schaumstoffkomponente 14 derart miteinander vernadelt,
dass zumindest mehr als 15 % der gesamten Verbindungsfläche 16 der Schaumstoffkomponente 14 von Fasern 18, 20 der Vliesstoffkomponente 12 durchstoßen sind. Somit dringen pro 1 cm² der Verbindungsfläche 16 der Schaumstoffkomponente 14 zumindest zwei Fasern 18, 20 der Vliesstoffkomponente 12 in die Schaumstoffkomponente 14 ein. Vorzugsweise dringen pro 1 cm² der Verbindungsfläche 16 der Schaumstoffkomponente 14 zumindest zehn Fasern 18, 20, insbesondere zwischen 20 und 300 Fasern 18,20, der Vliesstoffkomponente 12 in die Schaumstoffkomponente 14 ein. Es ist jedoch auch denkbar, dass pro 1 cm² der Verbindungsfläche 16 der Schaumstoffkomponente 14 mehr als zehn, insbesondere mehr als 300, Fasern 18, 20 der Vliesstoffkomponente 12 in die Schaumstoffkomponente 14 eindringen.

Ferner erstreckt sich zumindest ein Großteil von den in die Schaumstoffkomponente 14 eindringenden Fasern 18, 20 der Vliesstoffkomponente 12 zumindest bis zu 50 % einer maximalen Schaumstoffstärke 22 der Schaumstoffkomponente 14 in die Schaumstoffkomponente 14 hinein. Es ist jedoch auch denkbar, dass einzelne Fasern 18, 20 oder alternativ der Großteil der Fasern 18, 20 die Schaumstoffkomponente 14 vollständig durchdringen/durchdringt. Zudem ist es denkbar, dass sich einzelne Fasern 18, 20 oder alternativ der Großteil der Fasern 18, 20 weiter als 50 % der maximalen Schaumstoffstärke 22 der Schaumstoffkomponente 14 in die Schaumstoffkomponente 14 hinein erstrecken oder dass sich einzelne Fasern 18, 20 oder alternativ der Großteil der Fasern 18, 20 weniger als 50 % der maximalen Schaumstoffstärke 22 der Schaumstoffkomponente 14 in die Schaumstoffkomponente 14 hinein erstrecken/erstreckt. Ein Verhältnis der maximalen Schaumstoffstärke 22 der Schaumstoffkomponente 14 zu einer maximalen Vliesstoffstärke 24 der Vliesstoffkomponente 12 ist hierbei zumindest größer als oder gleich 1. Es ist jedoch auch denkbar, dass das Kaschierungstextilverbundmaterial ein Verhältnis einer maximalen Schaumstoffstärke der Schaumstoffkomponente zu einer maximalen Vliesstoffstärke der Vliesstoffkomponente aufweist, das zumindest kleiner als oder gleich 1 ist.

Des Weiteren sind die Vliesstoffkomponente 12 und die Schaumstoffkomponente 14 derart miteinander vernadelt, dass eine einer Schaumstoff-Vlies-Trennkraft entgegenwirkende Haltekraft zwischen der Vliesstoffkomponente 12 und der Schaumstoffkomponente 14 größer ist als 1 N. Dies wird durch einen Vernadelungsprozess der Vliesstoffkomponente 12 und der Schaumstoffkomponente 14 erreicht, bei dem die Fasern 18, 20 der Vliesstoffkomponente 12 mittels einer Nadelmaschine (hier nicht näher dargestellt) in die Schaumstoffkomponente 14 eingenadelt werden, wodurch die Fasern 18, 20 der Vliesstoffkomponente 12 mit der Schaumstoffkomponente 14 einen Form- und/oder Kraftschluss bilden. Die Vliesstoffkomponente 12 ist somit unverlierbar, also dauerhaft, mit der Schaumstoffkomponente 14 verbunden. Die Schaumstoffkomponente 14 weist hierbei ein Raumgewicht auf, das größer ist als 10 kg/m³. Die Vliesstoffkomponente 12 weist ein Flächengewicht auf, das größer ist als 45 g/m².

Ferner umfasst die Vliesstoffkomponente 12 zumindest eine Funktionsfaser 26, die einen Feinheitswert kleiner als oder gleich 50 dtex aufweist. Die Funktionsfaser 26 wird hierbei von einer der Fasern 18, 20 der Vliesstoffkomponente 12 gebildet. Die Funktionsfaser 26 ist als Hohlfaser ausgebildet. Hierbei kann die Funktionsfaser 26 jeden einem Fachmann als sinnvoll erscheinenden Querschnitt aufweisen, wie beispielsweise einen sternförmigen Querschnitt, einen viereckigen Querschnitt, einen trilobalen Querschnitt, einen hufeisenförmigen Querschnitt, einen kreisringförmigen Querschnitt o. dgl. Insgesamt weist die Vliesstoffkomponente 12 eine Vielzahl an Funktionsfasern 26 auf, die einen Feinheitswert kleiner als oder gleich 50 dtex aufweisen und insbesondere als Hohlfasern ausgebildet sind.

Zudem weist die Vliesstoffkomponente 12 zumindest eine Bindefaser 38 (Schmelzfaser) auf. Die Bindefaser 38 wird hierbei von einer der Fasern 18, 20 der Vliesstoffkomponente 12 gebildet. Insgesamt weist die Vliesstoffkomponente 12 eine Vielzahl an Bindefasern 38 auf. Die Bindefasern 38 und/oder die Funktionsfasern 26 der Vliesstoffkomponente 12 sind infolge eines Vermischens untereinander mittels einer formschlüssigen Verbindung (durch Verschlingung), mittels Kohäsion und/oder mittels Adhäsion verbunden. Hierbei können die Bindefasern 38 und/oder die Funktionsfasern 26 zu einer Bildung der Vliesstoffkomponente 12 orientiert oder wirr angeordnet sein.

Das Kaschierungstextilverbundmaterial 10 ist als Sitzbezugskaschierungstextilverbundmaterial ausgebildet. Somit ist das Kaschierungstextilverbundmaterial 10 zu einer zumindest teilweisen Bildung eines Sitzbezugs 30, insbesondere eines Kraftfahrzeugsitzbezugs vorgesehen. Hierzu ist das Kaschierungstextilverbundmaterial 10 mit zumindest einem weiteren Material 32, wie beispielsweise einem Stoff, einem Leder, einem Kunstleder o. dgl., verbindbar (Figuren 2 und 3). Der Sitzbezug 30 ist somit zumindest mittels einer Verbindung des Kaschierungstextilverbundmaterials 10 und des weiteren Materials 32 bildbar. In dem in Figur 2 dargestellten Ausführungsbeispiel ist das weitere Material 32 als Leder ausgebildet, das zur Bildung des Sitzbezugs 30 mit dem Kaschierungstextilverbundmaterial 10 verbindbar ist. Hierzu ist das weitere Material 32 auf einer der Vliesstoffkomponente 12 abgewandten Seite der Schaumstoffkomponente 14 anordenbar. Zu einer Verbindung des Kaschierungstextilverbundmaterials 10 und des weiteren Materials 32 weist das Kaschierungstextilverbundmaterial 10 oder der Sitzbezug 30 zumindest eine Verbindungskomponente 36 auf. Die Verbindungskomponente 36 ist als Klebekomponente ausgebildet. Hierbei ist es denkbar, dass die Verbindungskomponente 36 als Klebevlies/Klebeweb, als selbsthaftender Klebstoff, insbesondere als selbsthaftender, druckempfindlicher Klebstoff, o. dgl. ausgebildet ist. Bei einer Ausgestaltung der Verbindungskomponente 36 als Klebevlies/Klebeweb weist die Verbindungskomponente 36 eine netzartige Struktur auf und ist insbesondere aus einem ähnlichen oder gleichen Material wie die Bindefaser 38 ausgebildet, wobei die Verbindungskomponente 36 einen Schmelzpunkt aufweist, der einem Wert aus einem Wertebereich von 50 °C bis 140 °C, bevorzugt aus einem Wertebereich von 90 °C bis 100 °C entspricht.

Bei einer alternativen Ausgestaltung des weiteren Materials 32 als Stoff oder als Kunstleder ist die Verbindungskomponente 36 zumindest teilweise einteilig mit der Schaumstoffkomponente 14 ausgebildet oder die Verbindungskomponente 36 ist als zusätzliche Schaumstoffkomponente ausgebildet, wobei die Verbindungskomponente 36 in beiden Ausführungen flammkaschierbar ist. Bei einer Ausgestaltung der Verbindungskomponente 36 als zusätzliche Schaumstoffkomponente ist vorteilhafterweise ein, einem Fachmann bereits bekanntes Lost-Foam-Verfahren anwendbar. Hierbei ist die Verbindungskomponente 36 mittels eines Flammkaschierens an der Schaumstoffkomponente 14 anordenbar und das weitere Material 32 ist mittels eines Flammkaschierens an der bereits an der Schaumstoffkomponente 14 angeordneten Verbindungskomponente 36 anordenbar. Somit ist die als zusätzliche Schaumstoffkomponente ausgebildete Verbindungskomponente 36 nach dem Flammkaschieren lediglich als dünne Klebeschicht vorhanden. Es kann vorteilhaft eine ursprüngliche Stärke des Kaschierungstextilverbundmaterials 10 zumindest im Wesentlichen beibehalten werden. Ferner ist es ebenfalls denkbar, dass alternativ oder zusätzlich Klebepunkte und/oder Klebepulver, Meltprint-Verfahren, Hotmelt-Kleber, Klebefolien oder andere, einem Fachmann als sinnvoll erscheinende Klebemaßnahmen oder Klebeverfahren, insbesondere Heiß- oder Kaltklebeverfahren, zu einer Verbindung des weiteren Materials 32 mit der Schaumstoffkomponente 14 Anwendung finden, die vorteilhaft einen textilen Charakter des Kaschierungstextilverbundmaterials 10 erhalten.

Das Kaschierungstextilverbundmaterial 10 ist beispielsweise mittels einer Flachbettkaschieranlage oder mittels einer Lederfixieranlage mit dem weiteren Material 32 verbindbar. Hierbei kann eine Verarbeitungstemperatur zur Verbindung des Kaschierungstextilverbundmaterials 10 und des weiteren Materials 32 vorteilhaft gering gehalten werden, insbesondere bei einer Ausgestaltung der Verbindungskomponente 36 als Klebevlies/Klebeweb.

In Figur 3 weist der Sitzbezug 30 zusätzlich zum Kaschierungstextilverbundmaterial 10 und dem weiteren Material 32 zumindest ein Verstärkungsmaterial 34 auf. Das Verstärkungsmaterial 34 ist hierbei dazu vorgesehen, das weitere Material 32 zu verstärken. Somit ist das Verstärkungsmaterial 34 in dem in der Figur 3 dargestellten Ausführungsbeispiel des Kaschierungstextilverbundmaterials 10 als Lederverstärkungsmaterial ausgebildet. Es ist jedoch auch denkbar, dass das Verstärkungsmaterial 34 eine andere, einem Fachmann als sinnvoll erscheinende Ausgestaltung aufweist, insbesondere eine Ausgestaltung, die abhängig ist von einer Ausgestaltung des weiteren Materials 32. Das Verstärkungsmaterial 34 ist zwischen dem Kaschierungstextilverbundmaterial 10 und dem weiteren Material 32 angeordnet. Hierbei ist das Verstärkungsmaterial 34 auf einer der Vliesstoffkomponente 12 abgewandten Seite der Schaumstoffkomponente 14 angeordnet, insbesondere zwischen der Schaumstoffkomponente 14 und der Verbindungskomponente 36. Es ist jedoch auch denkbar, dass das Verstärkungsmaterial 34 eine andere, einem Fachmann als sinnvoll erscheinende Anordnung aufweist. Das Verstärkungsmaterial 34 kann als Gewebe, Gewirke, Gestrick, Gitter o. dgl. zu einer Lederunterstützung ausgebildet sein. Vorzugsweise ist das Verstärkungsmaterial 34 mittels eines Klebewebs (hier nicht näher dargestellt) mit der Schaumstoffkomponente 14 fixierbar. Somit kann eine Lederdehnung bei einer Belastung vorteilhaft zumindest im Wesentlichen verhindert bzw. zumindest vermindert werden. Zudem können vorteilhaft speziell belastete Bereiche des Sitzbezugs 30, wie beispielsweise eine Austrittsstelle eines Seitenairbags, mit entsprechenden Verstärkungen versehen werden. Ferner ist mittels einer geeigneten Wahl des Verstärkungsmaterials 34 gezielt zumindest eine Dehnungseigenschaft, eine Materialeigenschaft, insbesondere eine maximal auszuhaltende Zugkraft usw., des Kaschierungstextilverbundmaterials 10 veränderbar. Bei einer alternativen, hier nicht näher dargestellten Ausgestaltung des weiteren Materials 32 als Stoff oder als Kunstleder ist zudem denkbar, dass zusätzlich zur Verbindungskomponente 36 ein chemisches Bindemittel (hier nicht näher dargestellt), wie beispielsweise ein Klebstoff, vorgesehen ist, das am weiteren Material 32 und oder am Kaschierungstextilverbundmaterial 10 anordenbar ist. Dieses Bindemittel kann vorteilhaft einen Faserflug von Fasern des weiteren Materials 32 und/oder eine Anhaftung von Fasermaterial der Vliesstoffkomponente 12 an dem weiteren Material 32 zumindest im Wesentlichen vermeiden bzw. zumindest verringern, insbesondere nach einem Aushärteprozess des Bindemittels. Es kann vorteilhaft ein Fusselschutz ermöglicht werden.

Das Kaschierungstextilverbundmaterial 10 ermöglicht vorteilhaft auch an schwierigen Sitzkonturen eines Sitzes, insbesondere eines Kraftfahrzeugsitzes, wie beispielsweise an einer konvex ausgestalteten Polsterung eines Sitzes, an einem stark belasteten Bereich eines Sitzes, wie eine Seitenwange einer Einstiegsseite eines Sitzes usw., eine glatte und faltenfreie Anordnung des Kaschierungstextilverbundmaterials 10. Zudem ist das Kaschierungstextilverbundmaterial 10 vorteilhaft in kleinsten Radien hoch drapierfähig, wie beispielsweise bei einer Anordnung des Kaschierungstextilverbundmaterials 10 an einem Sitz, bei dem das Kaschierungstextilverbundmaterial 10 in einem Teilbereich des Kaschierungstextilverbundmaterials 10 konvex geformt ist und in einem direkt an den Teilbereich angrenzenden weiteren Teilbereich des Kaschierungstextilverbundmaterials 10 konkav geformt ist. Ferner ist das Kaschierungstextilverbundmaterial 10 schwer entflammbar nach FMVSS 302 bzw. ISO 3795 ausgebildet. Des Weiteren werden sämtliche mitgeltende Unterlagen der Automobilindustrie beachtet, beispielsweise Forderungen nach Emission/Fogging/Geruch, die Altautoverordnung, etc. pp.

Des Weiteren weist das Kaschierungstextilverbundmaterial 10 zumindest eine Fälschungssicherungseinheit 28 auf. Hierbei ist die Fälschungssicherungseinheit 28 zumindest im Wesentlichen unlösbar mit der Vliesstoffkomponente 12 und/oder mit der Schaumstoffkomponente 14 verbunden. In einer Ausgestaltung der Fälschungssicherungseinheit 28 ist die Fälschungssicherungseinheit 28 als elektronische Fälschungssicherungseinheit ausgebildet. Somit kann die Fälschungssicherungseinheit 28 beispielsweise als Elektronische Produktcode Einheit (EPC Einheit) ausgebildet sein oder eine andere, einem Fachmann als sinnvoll erscheinende Ausgestaltung aufweisen. Alternativ oder zusätzlich ist die Fälschungssicherungseinheit 28 als mechanische Fälschungssicherungseinheit ausgebildet. Hierbei ist es denkbar, dass beispielsweise in die Vliesstoffkomponente 12 ein als verschiedenfarbige Faser ausgebildetes Fälschungssicherungselement (hier nicht näher dargestellt) der Fälschungssicherungseinheit 28 eingearbeitet ist.

Weitere, einem Fachmann als sinnvoll erscheinende Ausgestaltungen der als mechanische Fälschungssicherungseinheit ausgebildeten Fälschungssicherungseinheit 28 sind ebenfalls denkbar.

### Bezugszeichen

- 10: Kaschierungstextilverbundmaterial
- 12: Vliesstoffkomponente
- 14: Schaumstoffkomponente
- 16: Verbindungsfläche
- 18: Faser
- 20: Faser
- 22: Schaumstoffstärke
- 24: Vliesstoffstärke
- 26: Funktionsfaser
- 28: Fälschungssicherungseinheit
- 30: Sitzbezug
- 32: weiteres Material
- 34: Verstärkungsmaterial
- 36: Verbindungskomponente
- 38: Bindefaser

## Patentansprüche

1. Sitzbezugskaschierungstextilverbundmaterial mit zumindest einer Vliesstoffkomponente (12) und mit zumindest einer Schaumstoffkomponente (14), die mit der Vliesstoffkomponente (12) verbunden ist, wobei die Vliesstoffkomponente (12) und die Schaumstoffkomponente (14) mechanisch miteinander verbunden sind, wobei die Vliesstoffkomponente (12) und die Schaumstoffkomponente (14) miteinander vernadelt sind, wobei die Vliesstoffkomponente (14) zumindest eine Bindefaser (38) und zumindest eine Funktionsfaser (26) umfasst, **dadurch gekennzeichnet, dass** eine einer Schaumstoff-Vlies-Trennkraft entgegenwirkende Haltekraft zwischen der Vliesstoffkomponente (12) und der Schaumstoffkomponente (14) größer ist als 1 N, wobei die Schaumstoffkomponente (14) eine maximale Schaumstoffstärke aufweist, die einem Wert aus einem Wertebereich von 1 mm bis 6 mm entspricht, wobei die Schaumstoffkomponente (14) als Polyurethan-Polyether-Schaum oder als Polyurethan-Polyester-Schaum ausgebildet ist, wobei die Funktionsfaser (26) einen Feinheitswert aufweist, der einem Wert zwischen 1,5 dtex und 24 dtex entspricht und wobei die Bindefaser (38) einen Feinheitswert aufweist, der einem Wert zwischen 1 dtex und 9 dtex entspricht.

2. Sitzbezugskaschierungstextilverbundmaterial nach Anspruch 1, **dadurch gekennzeichnet, dass** die Vliesstoffkomponente (12) und die Schaumstoffkomponente (14) miteinander vernadelt sind, wobei zumindest mehr als 5 % einer gesamten Verbindungsfläche (16) der Schaumstoffkomponente (14) von Fasern (18, 20) der Vliesstoffkomponente (12) durchstoßen sind.

3. Sitzbezugskaschierungstextilverbundmaterial nach Anspruch 1 oder 2, **dadurch gekennzeichnet, dass** die Vliesstoffkomponente (12) und die Schaumstoffkomponente (14) miteinander vernadelt sind, wobei zumindest mehr als 15 % einer gesamten Verbindungsfläche (16) der Schaumstoffkomponente (14) von Fasern (18, 20) der Vliesstoffkomponente (12) durchstoßen sind.

4. Sitzbezugskaschierungstextilverbundmaterial nach einem der vorhergehenden Ansprüche, **dadurch gekennzeichnet, dass** die Vliesstoffkomponente (12) und die Schaumstoffkomponente (14) miteinander vernadelt sind, wobei pro 1 cm² einer Verbindungsfläche (16) der Schaumstoffkomponente (14) zumindest zwei Fasern (18, 20) der Vliesstoffkomponente (12) in die Schaumstoffkomponente (14) eindringen.

5. Sitzbezugskaschierungstextilverbundmaterial nach einem der vorhergehenden Ansprüche, **dadurch gekennzeichnet, dass** die Vliesstoffkomponente (12) und die Schaumstoffkomponente (14) miteinander vernadelt sind, wobei zumindest ein Großteil von in die Schaumstoffkomponente (14) eindringenden Fasern (18, 20) der Vliesstoffkomponente (12) sich zumindest bis zu 50 % einer maximalen Schaumstoffstärke (22) der Schaumstoffkomponente (14) in die Schaumstoffkomponente (14) hinein erstreckt.

6. Sitzbezugskaschierungstextilverbundmaterial nach einem der vorhergehenden Ansprüche, **dadurch gekennzeichnet, dass** ein Verhältnis einer maximalen Schaumstoffstärke (22) der Schaumstoffkomponente (14) zu einer maximalen Vliesstoffstärke (24) der Vliesstoffkomponente (12) zumindest größer als oder gleich 1 ist.

7. Sitzbezugskaschierungstextilverbundmaterial nach einem der vorhergehenden Ansprüche, **dadurch gekennzeichnet, dass** die Funktionsfaser (26) als Hohlfaser ausgebildet ist.

8. Sitzbezugskaschierungstextilverbundmaterial nach einem der vorhergehenden Ansprüche, **dadurch gekennzeichnet, dass** die Schaumstoffkomponente (14) ein Raumgewicht aufweist, das größer ist als 10 kg/m³.

9. Sitzbezugskaschierungstextilverbundmaterial nach einem der vorhergehenden Ansprüche, **gekennzeichnet durch** zumindest eine Fälschungssicherungseinheit (28).

10. Sitzbezugskaschierungstextilverbundmaterial nach Anspruch 9., **dadurch gekennzeichnet, dass** die Fälschungssicherungseinheit (28) zumindest im Wesentlichen unlösbar mit der Vliesstoffkomponente (12) und/oder mit der Schaumstoffkomponente (14) verbunden ist.

11. Sitzbezugskaschierungstextilverbundmaterial nach Anspruch 9 oder 10, **dadurch gekennzeichnet, dass** die Fälschungssicherungseinheit (28) als elektronische Fälschungssicherungseinheit ausgebildet ist.

12. Sitzbezugskaschierungstextilverbundmaterial zumindest nach Anspruch 9 oder 10, **dadurch gekennzeichnet, dass** die Fälschungssicherungseinheit (28) als mechanische Fälschungssicherungseinheit ausgebildet ist.

13. Sitzbezug, der zumindest teilweise aus dem Sitzbezugskaschierungstextilverbundmaterial nach einem der vorhergehenden Ansprüche gebildet ist.

## Claims

1. Textile composite material for lamination of a seat cover, with at least one nonwoven fabric component (12) and with at least one foam material component (14) which is connected to the nonwoven fabric component (12), wherein the nonwoven fabric component (12) and the foam material component (14) are mechanically connected to each other,
wherein the nonwoven fabric component (12) and the foam material component (14) are needled with each other,
and wherein the non-woven fabric component (12) comprises at least one binder fibre (38) and at least one functional fibre (26),
**characterised in that** a holding force between the nonwoven fabric component (12) and the foam material component (14), which acts counter to a foamnonwoven separating force, is greater than 1 N, wherein the foam material component (14) has a maximum foam material thickness equivalent to a value of a value range between 1 mm and 6 mm, wherein the foam material component (14) is embodied as a polyurethane-polyether foam or as a polyurethane-polyester foam, wherein the functional fibre (26) has a linear mass density value equivalent to a value between 1.5 dtex and 24 dtex, and wherein the binder fibre (38) has a linear mass density value equivalent to a value between 1 dtex and 9 dtex.

2. Textile composite material for lamination of a seat cover according to claim 1, **characterised in that** the nonwoven fabric component (12) and the foam material component (14) are needled with each other, wherein at least more than 5 % of a total connecting surface (16) of the foam material component (14) are pierced by fibres (18, 20) of the nonwoven fabric component (12)

3. Textile composite material for lamination of a seat cover according to claim 1 or 2, **characterised in that** the nonwoven fabric component (12) and the foam material component (14) are needled with each other, wherein at least more than 15 % of a total connecting surface (16) of the foam material component (14) are pierced by fibres (18, 20) of the nonwoven fabric component (12).

4. Textile composite material for lamination of a seat cover according to one of the preceding claims,
**characterised in that** the nonwoven fabric component (12) and the foam material component (14) are needled with each other, wherein per 1 cm² of a connecting surface (16) of the foam material component (14) at least two fibres (18, 20) of the nonwoven fabric component (12) enter into the foam material component (14).

5. Textile composite material for lamination of a seat cover according to one of the preceding claims,
**characterised in that** the nonwoven fabric component (12) and the foam material component (14) are needled with each other, wherein at least a large portion of fibres (18, 20) of the nonwoven fabric component (12) entering into the foam material component (14) extend into the foam material component (14) by at least up to 50 % of a maximum foam material thickness (22) of the foam material component (14).

6. Textile composite material for lamination of a seat cover according to one of the preceding claims,
**characterised in that** a proportion of a maximum foam material thickness (22) of the foam material component (14) to a maximum nonwoven fabric thickness (24) of the nonwoven fabric component (12) is at least greater than or equal to 1.

7. Textile composite material for lamination of a seat cover according to one of the preceding claims,
**characterised in that** the functional fibre (26) is embodied as a hollow fibre.

8. Textile composite material for lamination of a seat cover according to one of the preceding claims,
**characterised in that** the foam material component (14) has a volumetric weight which is greater than 10 kg per m³.

9. Textile composite material for lamination of a seat cover according to one of the preceding claims,
**characterised by** at least one counterfeit protection unit (28).

10. Textile composite material for lamination of a seat cover according to claim 9, **characterised in that** the counterfeit protection unit (28) is connected to the nonwoven fabric component (12) and/or to the foam material component (14) at least substantially non-releasably.

11. Textile composite material for lamination of a seat cover according to claim 9 or 10,
**characterised in that** the counterfeit protection unit (28) is embodied as an electronical counterfeit protection unit.

12. Textile composite material for lamination of a seat cover according to claim 9 or 10,
**characterised in that** the counterfeit protection unit (28) is embodied as a mechanical counterfeit protection unit.

13. Seat cover which is embodied at least partly of the textile composite material for lamination of a seat cover according to one of the preceding claims.

## Revendications

1. Matériau composite textile de contre-collage pour revêtement de siège, avec au moins un composant non-tissé (12) et avec au moins un composant mousse (14) raccordé au composant non-tissé (12),
le composant non-tissé (12) et le composant mousse (14) étant raccordés l'un à l'autre mécaniquement,
le composant non-tissé (12) et le composant mousse (14) étant aiguillés l'un avec l'autre,
le composant non-tissé (12) comportant au moins une fibre liante (38) et au moins une fibre fonctionnelle (26),
**caractérisé en ce qu'**
une force de rétention entre le composant non-tissé (12) et le composant mousse (14), agissant contre une force séparatif mousse-non-tissé, est supérieure à 1 N, le composant mousse (14) ayant une épaisseur de mousse maximale correspondant à une valeur d'une range de valeurs d' 1 mm à 6 mm,
le composant mousse (14) étant implémenté comme mousse polyuréthanepolyéther ou comme mousse polyuréthane-polyester,
la fibre fonctionnelle (26) ayant une masse linéique correspondant à une valeur entre 1,5 dtex et 24 dtex, et la fibre liante (38) ayant une masse linéique correspondant à une valeur entre 1 dtex et 9 dtex.

2. Matériau composite textile de contre-collage pour revêtement de siège selon la revendication 1, **caractérisé en ce que** le composant non-tissé (12) et le composant mousse (14) sont aiguillés l'un avec l'autre, au moins plus de 5 % d'une entière surface raccordant (16) du composant (14) étant percés par des fibres (18, 20) du composant non-tissé (12).

3. Matériau composite textile de contre-collage pour revêtement de siège selon l'une quelconque des revendications 1 ou 2, **caractérisé en ce que** le composant non-tissé (12) et le composant mousse (14) sont aiguillés l'un avec l'autre, au moins plus de 15 % d'une entière surface raccordant (16) du composant mousse (14) étant percés par des fibres (18, 20) du composant non-tissé (12).

4. Matériau composite textile de contre-collage pour revêtement de siège selon l'une quelconque des revendications précédentes, **caractérisé en ce que** le composant non-tissé (12) et le composant mousse (14) sont aiguillés l'un avec l'autre, au moins deux fibres (18, 20) du composant non-tissé (12) pénétrant dans le composant mousse (14) par chaque cm² d'une surface raccordant (16) du composant mousse (14).

5. Matériau composite textile de contre-collage pour revêtement de siège selon l'une quelconque des revendications précédentes, **caractérisé en ce que** le composant non-tissé (12) et le composant mousse (14) sont aiguillés l'un avec l'autre, au moins une part large de fibres (18, 20) du composant non-tissé (12) pénétrant dans le composant mousse (14) s'étendant dans le composant mousse (14) au moins jusqu'à 50 % d'une épaisseur maximale de mousse (22) du composant mousse (14).

6. Matériau composite textile de contre-collage pour revêtement de siège selon l'une quelconque des revendications précédentes, **caractérisé en ce qu'**un ratio d'une épaisseur maximale de mousse (22) du composant mousse (14) et une épaisseur maximale de matériau non-tissé (24) du composant non-tissé (12) est au moins supérieure ou égale à 1.

7. Matériau composite textile de contre-collage pour revêtement de siège selon l'une quelconque des revendications précédentes, **caractérisé en ce que** la fibre fonctionnelle (26) est réalisée comme fibre creuse.

8. Matériau composite textile de contre-collage pour revêtement de siège selon l'une quelconque des revendications précédentes, **caractérisé en ce que** le composant mousse (14) comporte une masse volumique supérieure à 10 kg/m³.

9. Matériau composite textile de contre-collage pour revêtement de siège selon l'une quelconque des revendications précédentes, **caractérisé par** au moins une unité protectif contre la contrefaçon (28).

10. Matériau composite textile de contre-collage pour revêtement de siège selon la revendication 9, **caractérisé en ce que** l'unité protectif contre la contrefaçon (28) est raccordée au composant non-tissé (12) et/ou au composant mousse (14) de manière au moins sensiblement non-relâchable.

11. Matériau composite textile de contre-collage pour revêtement de siège selon l'une quelconque des revendications 9 ou 10, **caractérisé en ce que** l'unité protectif contre la contrefaçon (28) est implémentée comme unité protectif contre la contrefaçon électronique.

12. Matériau composite textile de contre-collage pour revêtement de siège selon l'une quelconque des revendications 9 ou 10, **caractérisé en ce que** l'unité protectif contre la contrefaçon (28) est implémentée comme unité protectif contre la contrefaçon mécanique.

13. Revêtement de siège implémenté au moins partiellement du matériau composite textile de contre-collage selon l'une quelconque des revendications précédentes.
